# EUROPÄISCHE PATENTSCHRIFT

(11) **EP 0 852 253 B1**
(45) Veröffentlichungstag und Bekanntmachung des Hinweises auf die Patenterteilung: **31.01.2001**
(21) Anmeldenummer: 97122222.9
(22) Anmeldetag: 17.12.1997
(51) Int. Cl.: C09J 7/04

(54) **Selbstklebendes Abdeckband**
Adhesive masking tape
Ruban de masquage autocollant

(30) Priorität: 07.01.1997 DE 19700255
(43) Veröffentlichungstag der Anmeldung: 08.07.1998
(73) Patentinhaber: Beiersdorf Aktiengesellschaft, 20245 Hamburg (DE)
(72) Erfinder: Seitz, Karsten, Dr., 21614 Buxtehude (DE); Knolle, Herbert, Dr., 21465 Reinbek (DE); Detzer, Christian, 22529 Hamburg (DE); Gereke, Robert, Dr., 20257 Hamburg (DE); Wöhrle, Clemens, Dr., 77716 Haslach (DE)

(56) Entgegenhaltungen:
- EP-A- 0 367 965
- DE-A- 2 809 422
- US-A- 5 496 601

## Beschreibung

### Gegenstand der Erfindung

Gegenstand der Erfindung sind dispersionsfarbenbeständige Abdeckbänder auf der Basis von gekreppten oder glatten Papierträgem. Die Dispersionsfarbenbeständigkeit wird trotz eines sehr geringen Imprägniermitteleintrags erreicht.

### 2. Hintergrund der Erfindung

### 2.1 Die Anwendung

Beim Malen und Lackieren von Oberflächen werden häufig selbstklebende Abdeckbänder eingesetzt, um Bereiche, die nicht mit Farben oder anderen Anstrichstoffen überzogen werden sollen, zu schützen. Nach dem Auftragen der Farbe können diese Bänder leicht wieder entfernt werden. Dabei wird individuell sehr unterschiedlich vorgegangen. Teilweise werden die Bänder erst nach dem vollständigen Abtrocknen der Anstrichstoffe entfernt, teilweise wird das "Ausdecken" des Objekts aber auch schon wenige Minuten nach dem Anstreichen vorgenommen. Ein universell einsetzbares Material muß in jedem Fall funktionieren, d. h. sich rückstandsfrei wieder entfernen lassen. Ein wichtiges Beurteilungskriterium ist dabei der Dispersionsfarbentest, da Dispersionsfarben im Maler- und Lackiererbereich eine weite Verbreitung haben. Das zu prüfende Band wird dabei auf einen definierten Untergrund aufgetragen, mit Dispersionsfarbe überstrichen und nach definierten Zeiten wieder abgezogen, wobei insbesondere der Zeitraum interessant ist, in dem die Farbe noch feucht ist, also nach 5 - 20 min.

### 2.2 Der Papierträger

Abdeckbänder für diesen Anwendungsbereich basieren häufig auf gekreppten Papierträgern. Die Kreppung verleiht dem Träger eine gewisse Dehnfähigkeit, so daß das Band auch in Kurven verklebt werden kann. Der Grad dieser Dehnfähigkeit hängt dabei wesentlich vom Grad der Kreppung ab. Die größte Verbreitung haben Malerabdeckbänder mit einer flachen Kreppung, die eine Dehnung von ca. 5 - 15 % gestattet, je nach Papiertype. Dies ermöglicht einerseits Kurvenkleben, vermeidet andererseits aber Probleme mit Unterläufem, wie sie oft bei unsachgemäßer Anwendung von hochgekreppten Abdeckbändern auftreten.

Für spezielle Einsatzzwecke kommen jedoch auch Papiere zum Einsatz, die nicht gekreppt sind. Wenn das Abdeckband gleichzeitig dazu dient, die Farbe in Form bestimmter Muster, die im Band durch Aussparungen vorgegeben sind, auf ein Oberfläche zu bringen, werden dimensionsstabile Träger eingesetzt. Diese Bänder werden als Schablonenbänder bezeichnet.

### 2.3 Die Imprägnierung

Zur Gewährleistung der Dehnfähigkeit werden die Papierträger in aller Regel imprägniert, d. h. in das Papier wird ein Polymer eingetragen. Das Polymer verleiht dem Papier zusätzliche Festigkeit, damit es auch bei stärkerer Beanspruchung nicht reißt oder spaltet. Die Imprägnierung wirkt sowohl beim trockenen als auch beim feuchten Papier festigkeitserhöhend, wobei dem feuchten Zustand besondere Bedeutung zukommt: Die Imprägnierung verhindert den Zutritt des Wassers in das Papier und verhindert das Erweichen. Es ist damit klar, daß die Imprägnierung für das Ergebnis des Dispersionsfarbentests sehr wichtig ist.

Als Imprägniermittel werden eine Reihe von verschiedenen Polymeren eingesetzt, diese können aus Lösung oder wässriger Dispersion angewendet werden. Es kommen z. B. in Betracht: Styrol-Butadien Copolymere, Acrylnitril-Butadien Coplymere, Acrylate, Polychloroprene sowie mit carboxylgruppenhaltigen- oder anderen Comonomeren modifizierte Polymere der genannten Gruppen. Es sind auch Mischungen der Polymere möglich sowie Mischungen mit weiteren Stoffen, z. B. Harzen, Weichmachern und anderen Hilfsstoffen.

Die Aufzählung erhebt keinesfalls den Anspruch auf Vollständigkeit, sondern soll lediglich der Anschaulichkeit dienen. Eine zusammenfassende Darstellung der Imprägniertechnik findet sich z. B. im Lehrbuch von D. Satas: Handbook of Pressure Sensitive Adhesive Technology, Van Nostrand Reinhold Company Inc., New York, 1982, (407 ff).

Für die vorliegende Erfindung ist die Anwendung von wässrigen Dispersionen von besonderem Interesse. Die Papierbahn wird in der Regel in die wässrige Dispersion des Imprägniermittels getaucht, so daß das Papier sich mit dieser vollsaugen kann. Der Überschuß, der sich noch auf der Bahn befindet, kann durch ein anschließendes Quetschwerk entfernt werden, bevor die nasse Papierbahn in Trockenöfen entwässert wird.

Es erscheint offensichtlich, daß das Papier für diesen Prozeßschritt eine gewisse Saugfähigkeit aufweisen muß. Die Saugfähigkeit eines Papieres läßt sich z. B. über die Saughöhe nach Klemm (ISO 8787) abschätzen. Eine weitere Prüfmethode ist der sogenannnte Tintenschwimmtest: Die vier Seiten eines rechteckigen Papiermusters werden hochgebogen, so daß sich ein schwimmfähiges "Schiffchen" ergibt. Dieses wird auf die wässrige Lösung einer Tinte aufgesetzt und die Zeit bestimmt, bis die Tinte die Oberseite des Papiers vollflächig eingefärbt hat. Krepp-Papiere, die imprägniert werden, haben üblicherweise Saughöhen von > 20 mm und liegen im Tintenschwimmtest bei << 1s.

### 2.4 Die Lackierung

Die imprägnierten Papierträger werden üblicherweise mit einer rückseitigen Lackierung versehen. Diese Lackierung hat i. wes. die Funktion, die Rückseite des Papiers gegenüber der Klebmasse zu schützen, die in der Rolle auf der Rückseite des Papiers zu liegen kommt. Dies ist die sogenannte Release-Funktion. Als Basis für Rückseitenlackierungen kommen deshalb Substanzen mit antiadhäsivem Charakter zum Einsatz. Andererseits muß die Rückseitenlackierung bei Masking Tapes ein Verkleben auf eigener Rückseite zulassen sowie auch eine ausreichende Haftung von Anstrichstoffen gewährleisten, damit diese beim Abziehen des Bandes nicht abbröckeln oder abplatzen und in den frischen Anstrich fallen. Es ist also für ein ausgewogenes Verhältnis von antiadhäsiven und adhäsiven Eigenschaften zu sorgen. Eine zusätzliche Eigenschaft der Rückseitenlackierung kann z. B. die Wasserfestigkeit sein, wie sie insbesondere im Automobilreparatursektor gefordert ist. Hier darf sich das Band unter der Wassereinwirkung des Naßschleifens nicht von der eigenen Rückseite lösen.

Sehr häufig werden wässrige Dispersionen oder Mischungen von wässrigen Dispersionen als Releaselacke eingesetzt, es sind aber auch lösemittelbasierte oder 100 % Systeme möglich.

Die Auswahl an geeigneten Polymeren als Basis für Release Coatings ist sehr groß, zusätzlich werden Release Systeme häufig als Mischungen verschiedener Polymere oder auch niedermolekularer, trennwirksamer Agentien, z. B. Wachsen, Fetten o. ä. formuliert. Es sollen in diesem Rahmen deshalb nur einige Möglichkeiten dargestellt werden: Häufig werden PVC-basierte Systeme, Acrylate, Acrylatcopolymere oder Vinylacetatcopolymere eingesetzt. Häufig bestehen die Systeme aus Mischungen, in denen ein Teil die Funktion eines Bindemittels übernimmt, während die Releasewirkung von einem weiteren Bestandteil herrührt. Als Beispiel sei hier die Mischung von einem SBR-Latex (Binder) mit einem Copolymer aus Styrol und Maleinsäureamid, wie in DE 2845541 beschrieben, genannt. Eine Übersicht über den Stand der Technik ist im oben zitierten Lehrbuch von Satas gegeben (370 ff).

### 2.5 Die Klebmasse, der Primer

Die Klebmasse muß einen sicheren Verbund zu den unterschiedlichsten Untergründen gewährleisten, einschließlich Untergründen mit einer gewissen Rauhigkeit. Gleichzeitig darf der Verbund aber auch nicht so stark sein, daß ein rückstandsfreies Entfernen nicht mehr möglich ist. Für die hier betrachteten Abdeckbänder werden sehr häufig Klebmassen auf Naturkautschukbasis eingesetzt, die aus Lösung auf die Träger appliziert werden. Die vorliegende Erfindung ist aber keineswegs auf die Verwendung solcher Klebsysteme beschränkt, vielmehr steht bei einem entsprechenden Eigenschaftsprofil auch dem Einsatz von Schmelzklebemassen auf Basis von Synthesekautschuken, Mischungen von Natur- mit Sysnthesekautschuken, Acrylaten oder entsprechenden Polymeren aus Dispersionen nichts entgegen.

Optional können die Träger vor dem Beschichten mit der Klebmasse noch mit einem Primer ausgerüstet werden. Dadurch wird die Verankerung der Masse zum Träger deutlich verbessert und die Neigung der Klebmasse zum Umspulen auf den Untergrund unterdrückt. Die Auswahl des Primers richtet sich nach der Chemie der Klebmasse und des Imprägniermittels. Hier existiert eine große Fülle von Möglichkeiten, die dem Fachmann wohlbekannt sind.

### 2.6 Aufgabe der Erfindung

Aufgabe der Erfindung war es, Abdeckbänder zu schaffen, die trotz eines geringeren Imprägniermitteleintrags in das Papier insbesondere hinsichtlich Dispersionsfarbenbeständigkeit den hohen Anforderungen genügen.

Bei Abdeckbändem werden häufig SBR-Latices als Imprägniermittel eingesetzt. Sie sind sehr wirksam, was die Hydrophobierung angeht und sehr preiswert im Vergleich zu anderen Rohstoffen. Es ist aber auch bekannt, daß diese Latices häufig in Wechselwirkung mit den Naturkautschukklebmassen treten und zwar beobachtet man häufig einen graduellen Abfall der Klebkraft mit der Zeit. Dies wird mit Migration von Klebharzen in die Imprägnierung erklärt. Ein weiterer wichtiger Punkt sind die ökologisch wichtigen Aspekte Rohstoff- und Energieverbrauch. Insbesondere die Energie zum Trocknen des Papiers kann durch einen geringeren Imprägniermitteleintrag drastisch gesenkt werden.

Überraschenderweise fanden wir, daß ein Abdeckband auf der Basis eines Trägers formuliert werden kann, der üblicherweise als nicht saugfähig und damit als nicht durchimprägnierbar eingestuft wird. Der Imprägniermitteleintrag liegt deutlich unter den bisher erreichten Eintragsmengen, trotzdem ist das resultierende Abdeckband dispersionsfarbenbeständig und erfüllt auch sonst alle Anforderungen eines Abdeckbandes für Maler und Lackierer.

Außerdem ist das Band wasserbeständig und damit prinzipiell auch als naßschliff-festes Abdeckband für den Automobilreparaturbereich geeignet.

### 3. Beschreibung der Erfindung

Nach dem Stand der Technik werden Träger eingesetzt, die eine Saughöhe nach Klemm von > 20 mm aufweisen. Bei dem oben beschriebenen Schiffchentest weisen sie Zeiten von deutlich weniger als 1 s auf. Die Träger haben Flächengewichte von ca. 33 - 70 g/m².

Diese hohen Saugfähigkeiten werden dadurch erreicht, daß dem Zellstoff als potentiell hydrophobierende Chemikalien im wesentlichen nur Naßfestmittel in geringen Dosierungen zugegeben werden, die ein Reißen der Bahn während des Imprägniervorgangs verhindern sollen. Übliche Naßfestmittel sind Polyamidoamin-Epichlorhydrinharze oder Melamin-Formaldehydharze. Neben dieser rezepturseitigen Maßnahme ist auch das Einhalten bestimmter Mahlbedingungen der Fasern wichtig, da die Saugfähigkeit des Papiers auch über den Mahlgrad gesteuert werden kann. All diese Maßnahmen sind dem Fachmann wohlbekannt und entsprechende Träger in großer Auswahl kommerziell erhältlich.

Es gibt aber auch die Möglichkeit, Träger zusätzlich zu hydrophobieren und zwar durch den Vorgang der Leimung. Die Stärke der Hydrophobierung der Fasern kann durch die Wahl des Leimungsmittels und die Dosierung gesteuert werden. Die Leimung erzeugt keine Erhöhung der Festigkeitseigenschaften des Papiers. Oft werden diese Eigenschaften durch zusätzliche Zugabe von Trockenverfestigungsmitteln erhöht, die gleichzeitig auch den Leimungseffekt verstärken. Als Leimungsmittel kommen eine Reihe von verschiedenen Stoffen zum Einsatz, z. B. Harze auf Kolophoniumbasis, Alkylketendimere (AKD-Harze) oder Alkenylketendimere. Trockenverfestigungsmittel können sein: Polyacrylamidharze, Polyvinylalkohole, Guar gum, Carboxymethylcellulose oder modifizierte Stärken. Eine Zusammenfassende Darstellungen der - Leimungstechnik bzw. der chemikalien finden sich im "Lehrbuch der Papier- und Kartonerzeugung" oder bei D. Smith, "Specialty paper chemicals: An overview", Tappi Journal, 78, No.7 (1995), p.66ff.

Alle diese Maßnahmen zur Hydrophobierung führen zu einer Verminderung der Saugfähigkeit des Papiers und damit zu einer Verminderung der Imprägniermittelaufnahme, was wiederum die Wasserresistenz der Träger negativ beeinflußt, mit all den Folgen auf die anwendungstechnischen Eigenschaften des fertigen Abdeckbandes.

Überraschenderweise haben wir aber gefunden, daß auch bei Verwendung von Trägem, die eine Saughöhe von < 5 mm, insbesondere 0, aufweisen, sich ein Produkt formulieren läßt, das alle Anforderungen an ein Abdeckband für Maler und Lackierer erfüllt, insbesondere auch die Dispersionsfarbenbeständigkeit. Der Imprägniermittelbedarf hingegen ist deutlich herabgesetzt. Ein positiver Nebeneffekt ist die bessere Verarbeitbarkeit der geleimten gegenüber den ungeleimten Trägem durch eine bessere Planlage des Papiers sowie reduzierten Schrumpf. Dies wird vermutlich durch die geringere Quellung der Fasern durch Wasser bewirkt.

Ausgangsbasis sind kommerziell erhältliche Papierträger insbesondere mit einem Flächengewicht von 33 - 42 g/m², insbesondere 33 - 38 g/m², mit Trägerdicken im Bereich 80 - 130 µm. Die Träger sind durch Zusatz von Leimungsmitteln soweit hydrophobiert, daß sie im Klemm-Test eine Saughöhe von < 5 mm, vorzugsweise < 1, insbesondere 0, und im Tintenschwimm-Test Zeiten von > 50 s aufweisen.

Bei der Imprägnierung mit einem SBR-Imprägnierlatex werden in diese Träger insbesondere lediglich 7 - 13, vorzugsweise 7 - 9 g/m² Imprägniermittelmenge eingetragen, gegenüber 14 - 20 g/m² bei nicht geleimten Trägern.

Anschließend wird der Träger mit einer Beschichtung rückseitenlackiert, die ihm insbesondere aufgrund ihrer Hydrophobie zusätzliche Wasserresistenz verleiht. Die Klebmasse liegt in ihrer Klebkraft insbesondere im für die Anwendung mittleren Bereich von 2.5 - 4 N/cm. Damit werden einerseits alle Anforderungen an die Haftung des Abdeckbandes erfüllt, andererseits aber vermieden, daß das Band mit hoher Kraft wieder vom Untergrund gelöst werden muß, so daß sich von dieser Seite negative Ergebnisse beim Dispersionsfarbentest einstellen könnten.

Es resultiert ein Abdeckband, das alle anwendungstechnischen Erfordernisse für Maler und Lackierer abdeckt, zur Erreichung dieses Eigenschaftsprofils jedoch wesentlich weniger Imprägniermittel benötigt als nach dem Stand der Technik üblich.

Die Erfindung soll im folgenden an Beispielen verdeutlicht werden, ohne sie aber dadurch unnötig einschränken zu wollen.

### Beispiel 1

Es wird ein geleimter, flachgekreppter Papierträger mit einem Flächengewicht von 37 g/m² als Basis eingesetzt.

Physikalische Daten des Trägers:

| | Wert | Einheit | Prüfmethode |
|---|---|---|---|
| HZK | 22 | N/cm | ISO 1924/2 |
| RD | 14 | % | ISO 1924/2 |
| Dicke | 112 | µm | ISO 534 |
| Saughöhe | 0 | | ISO 8787 |
| Zeit im "Tintenschwimm-Test" | 54 | s | |

Dieser Träger wird durch Tauchimprägnierung mit einem SBR-Latex imprägniert, der Überschuß an Imprägniermittel wird an einem Quetschwerk abgequetscht. Anschließend wird der imprägnierte Träger bis auf eine Restfeuchte von 4 % getrocknet.

Der SBR-Latex ist folgendermaßen charakterisiert:

| | |
|---|---|
| Feststoffgehalt | 30 % |
| Viskosität | 4 mPa s, Messung bei 25 °C |
| pH | 8 - 9 |
| Tg des freien Films | -15 °C (DSC) |

Die Eintragsmenge an Imprägniermittel beträgt 7 - 9 g/m²

Anschließend wird der imprägnierte Träger rückseitenlackiert, die Lackierung erfolgt auf die "runde" Seite des Trägers.

Als Lackierung wird eine Mischung eines SBR-Latex mit einer Trennemulsion auf Basis eines Copolymers aus Styrol und Maleinsäureamid eingesetzt. Die Herstellung dieses Polymers ist ausführlich im Patent DE2845541 beschrieben. Das Polymer wird als 19%ige, wässrige Emulsion eingesetzt.

Die beiden wässrigen Latices werden im Verhältnis 80:20, bezogen auf die Festkörperanteile, gemischt und anschließend durch Wasserzugabe auf einen Feststoffgehalt von 38 % verdünnt.

Charakterisierung des SBR-Latex:

| | |
|---|---|
| Feststoffgehalt | 48 % |
| pH | 8 - 9 |
| Tg des freien Films | - 3 °C |

Die so erhaltene Lackierung wird über eine Walze an die Papierbahn angetragen und der Überschuß mit einem Rakel abgerakelt, so daß nach dem Trocknen der Bahn ein Lackfilm von 8 g/m² resultiert.

Auf die der Lackseite gegenüberliegenden Seite des Papiers wird schließlich die Klebmasse aufgetragen. Als Klebmasse kommt eine lösungsmittelbasierte Naturkautschukklebmasse zum Einsatz. Die Masse besteht zu 45 % aus Naturkautschuk, 40 % Kohlenwasserstoffharz (Handelsname: Hercures 5742), 14 % anorgischem Füllstoff auf Basis Zinkoxid sowie 1 % Alterungsschutzmitteln. Diese Stoffe werden nach den in der Kautschukindustrie üblichen Methoden in Lösung gebracht. Als Lösungsmittel dient Siedegrenzenbenzin 60/95, der Feststoffgehalt beträgt 37 %. Die Masse wird in einer solchen Schichtstärke aufgerakelt, daß nach dem Abtrocknen des Benzins ein Masseauftrag von 40 g/m² verbleibt.

Das so erhaltene Masking Tape weist hevorragende Eigenschaften auf, es ist dispersionsfarbenbeständig und auch für den Naßschliff geeignet. Die Daten sind in der Übersichtstabelle zusammengefaßt.

### Beispiel 2

Es wird ein glatter, ungekreppter Papierträger mit eine Flächengewicht von 33 g/m² und einer dicke von 80 pm eingesetzt. Der Träger ist durch eine Masseleimung hydrophobiert und weist dadurch eine Saughöhe von 0 auf.

Physikalische Daten des Trägers:

| | Wert | Einheit | Prüfmethode |
|---|---|---|---|
| HZK | 53 | N/cm | ISO 1924/2 |
| RD | 3 | % | ISO 1924/2 |
| Dicke | 80 | µm | ISO 534 |
| Saughöhe | 0 | | ISO 8787 |
| Zeit im "Tintenschwimm-Test" | 60 | s | |

Dieser Träger wird durch Tauchimprägnierung mit einem SBR-Latex imprägniert, der Überschuß an Imprägniermittel wird an einem Quetschwerk abgequetscht. Anschließend wird der imprägnierte Träger bis auf eine Restfeuchte von 4 % getrocknet.

Der SBR-Latex entspricht dem im Beispiel 1 angegebenen. Die Eintragsmenge an Imprägniermittel beträgt 13 g/m²

Anschließend wird der imprägnierte Träger rückseitenlackiert. Die Lackierung entspricht der in Beispiel 1 angegebenen, allerdings beträgt das Verhältnis der Bestandteile SBR-Latex/Copolymer aus Styrol und Maleinsäureamid 70:30, bezogen auf Festkörperanteile. Die Mischung wird mit Wasser auf einen FK von 40 % gebracht.

Die Lackierung wird über eine Walze an die Papierbahn angetragen und der Überschuß mit einem Rakel abgerakelt, so daß nach dem Trocknen der Bahn ein Lackfilm von 4 g/m² resultiert.

Auf die der Lackseite gegenüberliegenden Seite des Papiers wird schließlich die Klebmasse aufgetragen. Die Klebmasse entspricht in ihrer Zusammensetzung der im Beispiel 1 angegebenen.

Die Masse wird in einer solchen Schichtstärke aufgerakelt, daß nach dem Abtrocknen des Benzins ein Masseauftrag von 68 g/m² verbleibt.

Es resultiert ein dispersionsfarbenbeständiges Tape, das sich als Schablonenband und als Malerabdeckband für die Mehrfarbenlackierung eignet, insbesondere in Bereichen, in denen es auf gerade Farbkanten ankommt.

### Übersichtstabelle

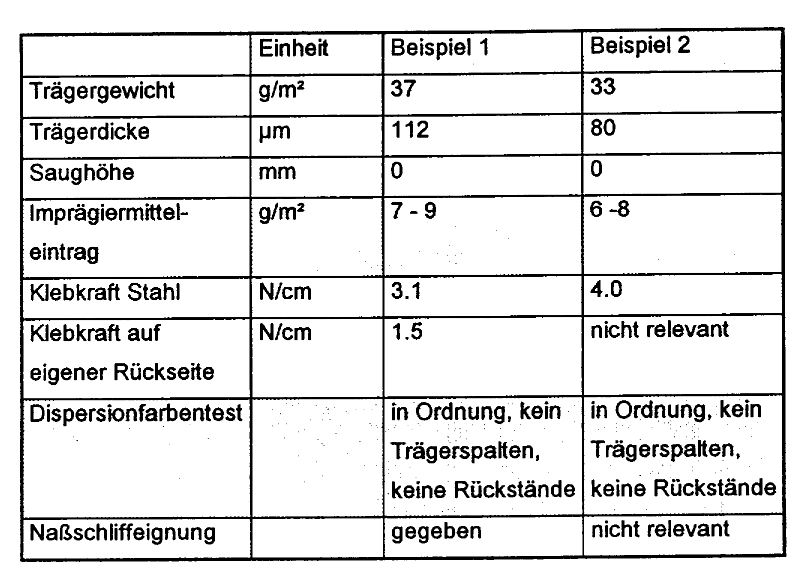

## Patentansprüche

1. Selbstklebendes Abdeckband mit einem Papierträger, der auf der einen Seite eine Selbstklebemasse trägt und auf der anderen Seite eine Rückseitenlackierung, dadurch gekennzeichnet, daß der Papierträger durch Zusatz von Leimungsmitteln hydrophobiert ist, bevor er mit einem Imprägniermittel ausgerüstet ist,

2. Abdeckband nach Anspruch 1, dadurch gekennzeichnet, daß der Papierträger derart hydrophobiert ist, daß er vor der Imprägnierung im Klemm-Test eine Saughöhe von unter 1 mm, insbesondere 0, zeigt.

3. Abdeckband nach Anspruch 1, dadurch gekennzeichnet, daß der Papierträger mit 7 - 13, insbesondere 7 - 9 g/m² eines Imprägniermittels ausgerüstet ist.

4. Abdeckband nach Anspruch 1, dadurch gekennzeichnet, daß der Papierträger ein Flächengewicht von 33 - 42, insbesondere 33 - 38 g/m² hat.

5. Abdeckband nach Anspruch 1, dadurch gekennzeichnet, daß die Selbstklebemasse eine solche auf Kautschukbasis, insbesondere Naturkautschukbasis ist.

6. Abdeckband nach Anspruch 1, dadurch gekennzeichnet, daß der Papierträger glatt oder insbesondere gekreppt ist.

7. Abdeckband nach Anspruch 1, dadurch gekennzeichnet, daß die Rückseitenlackierung wasserfest ist.

8. Verwendung eines Abdeckbandes nach einem der Ansprüche 1 - 7 als gekrepptes Malerabdeckband oder als glattes/ungekrepptes Schablonenband.

## Claims

1. Self-adhesive masking tape having a paper backing which carries a self-adhesive composition on one side and a reverse-side coating on the other side, characterized in that the paper backing has been hydrophobicized by adding sizing agents before it has been provided with an impregnating agent, the paper backing being hydrophobicized in such a way that prior to the impregnation it exhibits a capillary rise of <5 mm in the Klemm test.

2. Masking tape according to Claim 1, characterized in that the paper backing has been hydrophobicized such that prior to the impregnation it exhibits a capillary rise of less that 1 mm, especially 0, in the Klemm test.

3. Masking tape according to Claim 1, characterized in that the paper backing has been provided with 7 - 13, especially 7 - 9 g/m² of an impregnating agent.

4. Masking tape according to Claim 1, characterized in that the paper backing has a basis weight of 33 - 42, especially 33 - 38 g/m.

5. Masking tape according to Claim 1, characterized in that the self-adhesive composition is based on rubber, especially natural rubber.

6. Masking tape according to Claim 1, characterized in that the paper backing is smooth or, in particular, creped.

7. Masking tape according to Claim 1, characterized in that the reverse-side coating is water resistant.

8. Use of a masking tape according to one of Claims 1 - 7, as a creped decorating masking tape or as a smooth/uncreped stencil tape.

## Revendications

1. Ruban de masquage autocollant avec un support papier présentant une composition autocollante sur l'un de ses côtés et un revêtement de revers sur l'autre côté, caractérisé en ce que le support papier est hydrophobisé par addition d'agents d'encollage, avant d'être pourvu d'un agent d'imprégnation, le support papier étant hydrophobisé de telle sorte qu'il présente une remontée capillaire < 5 mm dans l'essai de Klemm avant l'imprégnation.

2. Ruban de masquage selon la revendication 1, caractérisé en ce que le support papier est hydrophobisé de telle sorte qu'il présente une remontée capillaire inférieure à 1 mm, en particulier nulle, dans l'essai de Klemm avant l'imprégnation.

3. Ruban de masquage selon la revendication 1, caractérisé en ce que le support papier est pourvu de 7 à 13, en particulier de 7 à 9 g/m² d'un agent d'imprégnation.

4. Ruban de masquage selon la revendication 1, caractérisé en ce que le support papier présente un poids surfacique de 33 à 42, en particulier de 33 à 38 g/m².

5. Ruban de masquage selon la revendication 1, caractérisé en ce que la composition autocollante est à base de caoutchouc, en particulier à base de caoutchouc naturel.

6. Ruban de masquage selon la revendication 1, caractérisé en ce que le support papier est lisse ou en particulier crêpé.

7. Ruban de masquage selon la revendication 1, caractérisé en ce que le revêtement de revers est résistant à l'eau.

8. Utilisation d'un ruban de masquage selon l'une quelconque des revendications 1 à 7, en tant que ruban de masquage de décoration crêpé ou en tant que ruban stencil lisse/non crêpé.
